# EUROPEAN PATENT SPECIFICATION

(11) **EP 3 609 134 B1**
(45) Date of publication and mention of the grant of the patent: **13.04.2022**
(21) Application number: 18915781.1
(22) Date of filing: 14.06.2018
(51) Int. Cl.: H04L 12/28, H04L 12/24, H04L 12/26, H04L 12/721

(54) **BGP ANYCAST CLUSTER SERVICE QUALITY DETECTION METHOD AND DETECTION APPARATUS**
VERFAHREN ZUR DETEKTION DER DIENSTGÜTE EINES BGP-ANYCAST-CLUSTERS UND DETEKTIONSVORRICHTUNG
PROCÉDÉ DE DÉTECTION DE QUALITÉ DE SERVICE DE GRAPPE ANYCAST BGP ET APPAREIL DE DÉTECTION

(30) Priority: 28.04.2018 CN 201810403078
(43) Date of publication of application: 12.02.2020
(73) Proprietor: Wangsu Science & Technology Co., Ltd., Shanghai 200030 (CN)
(72) Inventor: Chen, Danjiang, Xuhui District Shanghai 200030 (CN)
(74) Representative: de Arpe Fernandez, Manuel
(86) International application number: PCT/CN2018/091210
(87) International publication number: WO 2019/205247

(56) References cited:
- CN-A- 101 911 600
- CN-A- 103 354 525
- CN-A- 107 465 526
- JP-A- 2000 069 044
- US-B1- 7 058 706
- ASHLEY RAVEL PRADEEPKUMAR MANI MICROSOFT MICROSOFT ASHLEYFI@MICROSOFT COM PRMANI @ MICROSOFT COM JIE LIU YINGYING CHEN MICROSOFT R: "FastRoute: A Scalable Load-Aware Anycast Routing Architecture for Modern CDNs", USENIX, USENIX, THE ADVANCED COMPUTING SYSTEMS ASSOCIATION , 4 May 2015 (2015-05-04), pages 388-401, XP061024750, Retrieved from the Internet: URL:https://www.usenix.org/sites/default/f iles/nsdi15_full_proceedings_interior.pdf [retrieved on 2015-05-04]
- XUE JING'AN ET AL: "CDNs Meet CN An Empirical Study of CDN Deployments in China", IEEE ACCESS, vol. 5, 17 May 2017 (2017-05-17), pages 5292-5305, XP011649265, DOI: 10.1109/ACCESS.2017.2682190 [retrieved on 2017-05-12]
- DDI GURU: "Anycast DNS-Part 2, Using Static Routes", , 15 February 2014 (2014-02-15), pages 1, 3-6, XP055648352, Retrieved from the Internet: URL:http://ddiguru.com/blog/119-anycast-dn s-part-2-using-static-rou-tes

## Description

### TECHNICAL FIELD

The present disclosure relates to the field of network technologies and, in particular, to a detection method and a detection device for detecting quality of service (QoS) of a Border Gateway Protocol (BGP) anycast cluster.

### BACKGROUND

BGP is a routing protocol of an autonomous system running on the Transmission Control Protocol (TCP). The main function of a BGP system is to exchange network reachability information with other BGP systems. Anycast is a group of servers that provide a specific service through an anycast address on an Internet Protocol (IP) network. At the same time, a client terminal does not care which server to provide the service, such as Domain Name System (DNS) or a mirroring service. A message accesses the address can be routed by the IP network to any of the servers in the target group. Anycast can provide a stateless and best-effort service. BGP anycast uses the same IP address for different servers. Specifically, multiple servers use anycast technology to provide external services using an anycast address, that is, BGP anycast cluster service.

At present, more and more service providers use BGP anycast to provide services. With the principle of BGP route selection, short autonomous system (AS) paths are selected as optimal paths, thereby optimizing access speed. However, when there is a problem with the client terminal accessing the BGP anycast address, and the target IP has only one BGP anycast address, because it cannot be accurately determined which entity server the client specifically accesses, it is difficult to accurately handle the abnormality of the server. For the service providers, uncertainties of the route selection causes difficulties to monitor the QoS of the BGP anycast cluster.

The relevant state of the art is represented by Ashley Ravel, Pradeepkumar Mani, Jie Liu, Yingying Chen: "FastRoute: A Scalable Load-Aware Anycast Routing Architecture for Modern CDNs", Usenix, The Advanced Computing Systems Association, 4 may 2015 (2015-05-04), pages 388-401; CN 107465526 A; US 7058706 B1 and Xue Jing'an et al: "CDNs Meet CN An Empirical Study of CON 04 Deployments in China", IEEE Access, vol. 5 , pages 5292-5305.

### SUMMARY

The present invention provides a method as detailed in claim 1. Also provided is a detection device according to claim 8 and a detection device according to claim 11. Advantageous features are provided in the dependent claims. Embodiments of the present disclosure provide a detection method and a detection device for detecting QoS of a BGP anycast cluster, which are used to accurately collect the detection index data of the entity server in the BGP anycast cluster to improve the QoS of the BGP anycast cluster.

In order to achieve the above object, embodiments of the present disclosure adopt the following technical solutions.

In a first aspect, embodiments of the present disclosure provide a method for detecting the QoS of a BGP anycast cluster, which is implemented in a detection device for the QoS of the BGP anycast cluster, and the method includes that:
the detection device receives detection-task information for detecting the QoS of the BGP anycast cluster, where the detection-task information includes a BGP anycast IP address;
the detection device sends detection-request information to the BGP anycast IP address, where the detection-request information is received by an entity server in the BGP anycast cluster that has a shortest autonomous system (AS) path from the detection device;
the detection device receives detection-response information sent by the entity server in the BGP anycast cluster, where the detection-response information includes an IP address of the entity server; and
the detection device generates detection index data according to the detection-request information and the received detection-response information, where the detection index data includes the BGP anycast IP address and the IP address of the entity server.

In a first possible implementation manner of the first aspect, the detection-request information includes http protocol detection-request information.

In a second possible implementation manner of the first aspect, the detection-request information includes DNS protocol detection-request information.

In a third possible implementation manner of the first aspect, the detection index data further includes a status code and a response time of the entity server.

In conjunction with the first aspect or the first possible implementation of the first aspect or the second possible implementation of the first aspect or the third possible implementation of the first aspect, in a fourth possible implementation, after the detection device generates the detection index data according to the sent detection-request information and the received detection-response information, the method further includes that:
the detection index data is analyzed to obtain the QoS data of the entity server in the BGP anycast cluster.

In a second aspect, embodiments of the present disclosure provide a detection device for detecting QoS of a BGP anycast cluster. There are multiple detection devices, and the detection devices are distributed in the BGP anycast cluster network. The detection device includes:
a receiving module, configured to receive detection-task information for detecting the QoS of the BGP anycast cluster, where the detection-task information includes a BGP anycast IP address; and
a sending module, configured to send a detection-request information to the BGP anycast IP address, where the detection-request information is received by an entity server in the BGP anycast cluster that has a shortest AS path from the detection device;
where the receiving module is further configured to receive a detection-response information sent by the entity server in the BGP anycast cluster, where the detection-response information includes an IP address of the entity server; and
where the detection device further includes a processing module, and the processing module is configured to generate detection index data according to the sent detection-request information and the received detection-response information, where the detection index data includes the BGP anycast IP address and the IP address of the entity server.

In a first possible implementation manner of the second aspect, the detection-request information includes http protocol detection-request information.

In a second possible implementation manner of the second aspect, the detection-request information includes DNS protocol detection-request information.

In a third possible implementation manner of the second aspect, the detection index data further includes a status code and a response time of the entity server.

With reference to the second aspect or the first possible implementation of the second aspect or the second possible implementation of the second aspect or the third possible implementation of the second aspect, in a fourth possible implementation manner, an analyzing module is included and the analyzing module is configured to analyze the detection index data to obtain the QoS data of the entity server in the BGP anycast cluster.

According to the technical solutions provided by embodiments of the present disclosure, on one hand, each entity server in the BGP anycast cluster can be detected by arranging multiple detection devices in the BGP anycast cluster network. On the other hand, after receiving the detection task of the QoS of the BGP anycast cluster, the detection device sends a detection-request information to the BGP anycast IP address to execute the detection task, where the detection-request information is received by an entity server in the BGP anycast cluster that has a shortest AS path from the detection device. Then, the entity server in the BGP anycast cluster sends the detection-response information to the detection device, where the detection-response information includes an IP address of the entity server. Thus, the detection device can generate the detection index data according to the sent detection-request information and the received detection-response information, where the detection index data includes the BGP anycast IP address and the IP address of the entity server. If the entity server fails, the failed server can be quickly found through the entity server IP. Therefore, the technical solutions provided by embodiments of the present disclosure can accurately collect the detection index data of the entity server in the BGP anycast cluster, thereby improving the QoS of the BGP anycast cluster.

### DESCRIPTION OF THE DRAWINGS

In order to more clearly illustrate the technical solutions in embodiments of the present disclosure, the drawings used in the description of the embodiments are briefly described below. It is obvious that the drawings in the following description are only some embodiments of the present disclosure. Other drawings may also be obtained from those of ordinary skill in the art in view of the drawings without any creative effort.
FIG. 1 is a flowchart of a method for detecting quality of service (QoS) of a BGP anycast cluster according to a first method embodiment of the present disclosure;
FIG. 2 is a flowchart of a method for detecting QoS of a BGP anycast cluster according to a second method embodiment of the present disclosure;
FIG. 3 is a flowchart of a method for detecting QoS of a BGP anycast cluster according to a third method embodiment of the present disclosure;
FIG. 4 is a flowchart of a method for detecting QoS of a BGP anycast cluster according to a fourth method embodiment of the present disclosure;
FIG. 5 is a structural diagram of a detection device according to a first device embodiment of the present disclosure;
FIG. 6 is a structural diagram of a detection device according to a second device embodiment of the present disclosure; and
FIG. 7 is a structural diagram of a detection device according to another device embodiment of the present disclosure.

### DETAILED DESCRIPTION

The technical solutions in embodiments of the present disclosure are clearly and completely described in the following with reference to the accompanying drawings in the embodiments of the present disclosure. It is obvious that the described embodiments are only a part of the embodiments of the present disclosure, but not all the embodiments. All other embodiments obtained by those skilled in the art based on the embodiments of the present disclosure without creative efforts are within the scope of the present disclosure.

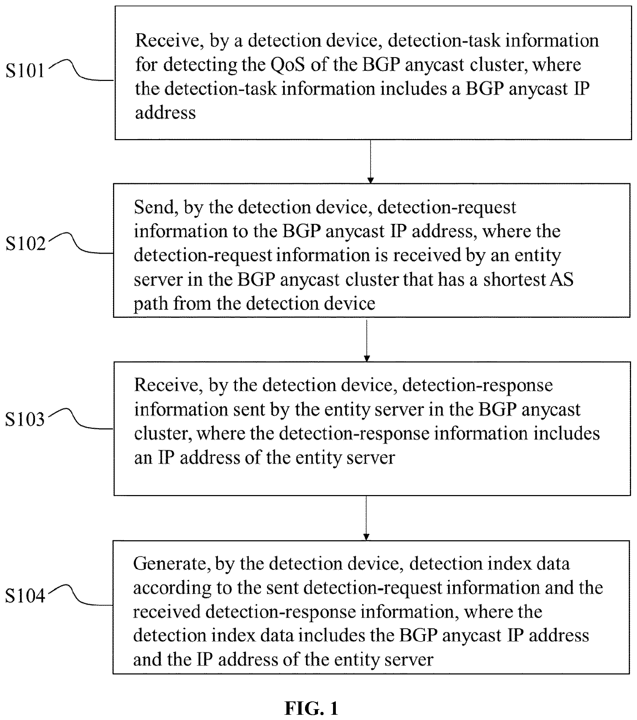

FIG. 1 is a flowchart of a method for detecting quality of service (QoS) of a BGP anycast cluster according to a first method embodiment of the present disclosure. The method in the present embodiment of the present disclosure is implemented to a detection device for detecting the QoS of the BGP anycast cluster. A quantity of detection devices may be multiple, and the detection devices are distributed in the BGP anycast cluster network. As shown in FIG. 1, the method according to embodiments of the present disclosure may include the following content.

S101: The detection device receives detection-task information for detecting the QoS of the BGP anycast cluster, where the detection-task information includes a BGP anycast IP address.

Specifically, the detection task may be set according to different requirements of the QoS of the BGP anycast cluster in different application scenarios. The detection-task information may be a task instruction sent by a detection-task management personnel to the detection device through other network devices, or may be a task instruction input by the detection-task management personnel through a human-computer interaction interface of the detection device. The detection device may be a surveillance device.

S102: The detection device sends detection-request information to the BGP anycast IP address, where the detection-request information is received by an entity server in the BGP anycast cluster that has a shortest AS path from the detection device.

For example, when detecting the QoS of a BGP anycast cluster that has an IP address 1.1.1.1, the http protocol detection-request information: GET http://www.wangsu.com/ is used, where www.wangsu.com is a test domain name to detection. The IP address comes out after analysis is 1.1.1.1, which is the BGP anycast IP address. After sending a detection-request information to the BGP anycast IP address, the detection device selects the entity server with the shortest AS path from the detection device to receive.

S103: The detection device receives a detection-response information sent by the entity server in the BGP anycast cluster, where the detection-response information includes an IP address of the entity server.

The detection device sends a detection-request information to the BGP anycast IP address. After receiving the detection-request information, the entity server that provides the service writes the actual IP address thereof into the response content.

S104: The detection device generates detection index data according to the sent detection-request information and the received detection-response information, where the detection index data includes the BGP anycast IP address and the IP address of the entity server.

After receiving the detection-response information, the detection device can accurately obtain the IP address of the detected entity server, and thus can accurately correlate the detected index data with the entity server IP and anycast IP. The detected index data may also include a status code and a response time of the entity server.

According to the technical solutions provided by embodiments of the present disclosure, each entity server in the BGP anycast cluster can be detected by arranging multiple detection devices in the BGP anycast cluster network. After receiving the detection task of the QoS of the BGP anycast cluster, the detection device sends a detection-request information to the BGP anycast IP address to execute the detection task, where the detection-request information is received by an entity server in the BGP anycast cluster that has a shortest AS path from the detection device. Then, the entity server in the BGP anycast cluster sends the detection-response information to the detection device, where the detection-response information includes an IP address of the entity server. Thus, the detection device can generate the detection index data according to the sent detection-request information and the received detection-response information, where the detection index data includes the BGP anycast IP address and the IP address of the entity server. If the entity server fails, the failed server can be quickly found through the entity server IP. Therefore, the technical solutions provided by embodiments of the present disclosure can accurately collect the detection index data of the entity server in the BGP anycast cluster, thereby improving the QoS of the BGP anycast cluster.

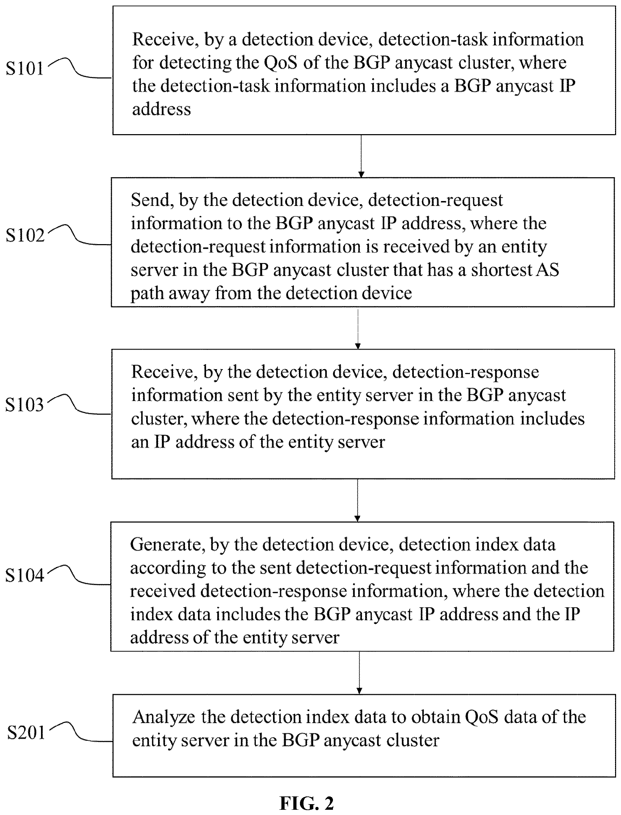

FIG. 2 is a flowchart of a method for detecting QoS of a BGP anycast cluster according to a second method embodiment of the present disclosure. As shown in FIG. 2, on the basis of the first method embodiment of the present disclosure shown in FIG. 1, after the detection device generates detection index data according to the sent detection-request information and the received detection-response information in S104, the method in present embodiment may further include the following content.

S201: The detection index data is analyzed to obtain the QoS data of the entity server in the BGP anycast cluster.

For example, based on the collected BGP anycast IP address, the IP address of the entity server, and the status code and the response time of the entity server, the service status of the entity server in the entire BGP anycast cluster can be obtained by big data analytics.

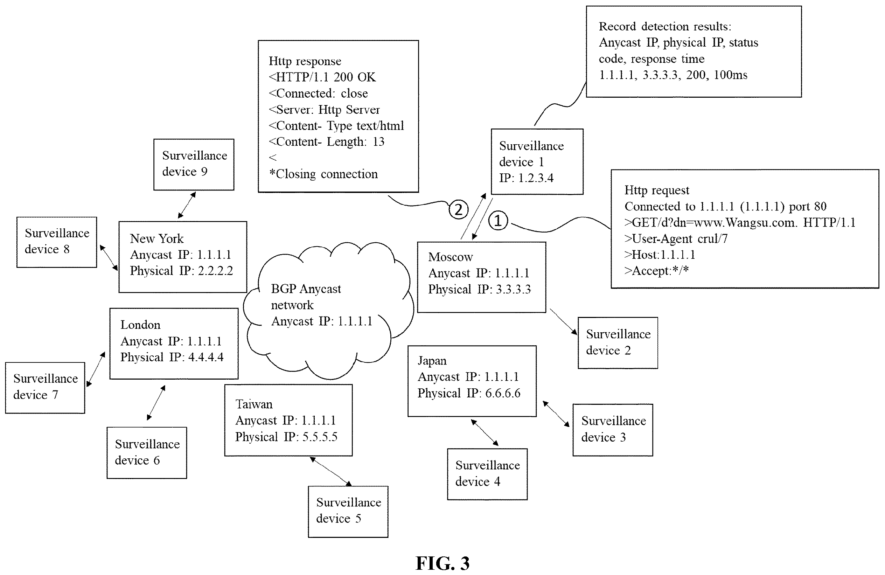

FIG. 3 is a flowchart of a method for detecting QoS of a BGP anycast cluster according to a third method embodiment of the present disclosure. As shown in FIG. 3, in the method of the present embodiment, the detection device is a surveillance device, and the detection-request information is an http protocol detection-request information.

Assuming that the IP of the surveillance device 1 is 1.2.3.4, and the http detection protocol is used to detection the QoS of the BGP anycast cluster with the IP address of 1.1.1.1, an initiated detection-request information is: GET http://www.wangsu.com/ (www.wangsu.com is the test domain name for detecting, and the resolved IP is 1.1.1.1). When initiating a request to an anycast IP 1.1.1.1, the surveillance device 1 selects a node with the shortest AS path from the surveillance device 1, which is assumed to be the server in Moscow (of which the entity server IP is 3.3.3.3), in process ① in FIG. 3. After accessed by the surveillance device to the detection URL, the entity server with the IP address 3.3.3.3 writes its own physical IP 3.3.3.3 to the response content, and responds to the surveillance device 1 (IP: 1.2.3.4), in process ② in FIG. 3.

When receiving the response from the server (IP 3.3.3.3) in Moscow, the surveillance device 1 extracts the response content, and combines the BGP anycast IP, the physical machine IP, the status code, and the response time into a piece of detection data. As such, detecting for an http of a surveillance point to BGP anycast IP can be completed. By analogy, the http detection for the BGP anycast IP can be detected by a large number of surveillance devices to obtain the detection index data of the BGP anycast IP and the corresponding physical IP. Through big data analytics, the service status of the entire BGP anycast service cluster can be obtained.

In the present embodiment, when the surveillance device initiates the http request detection to the BGP anycast IP, after receiving the http request, the entity server writes the entity server IP into the response content, and after receiving the response content, the surveillance device corelates detection index (status code, the response time, etc.) with the entity server IP and BGP anycast IP to complete the collection of the detection index data.

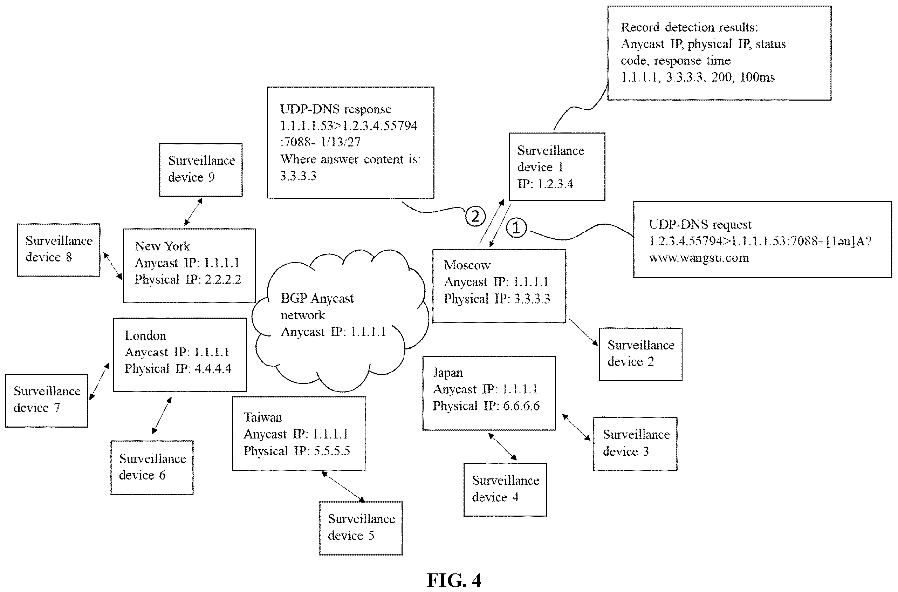

FIG. 4 is a flowchart of a method for detecting QoS of a BGP Anycast cluster according to a fourth method embodiment of the present disclosure. As shown in FIG. 4, in the method of the present embodiment, the detection-request information is DNS protocol detection-request information. Compared with the third method embodiment, the service status of the entire BGP anycast service cluster is obtained by replacing the detection protocol with the DNS protocol. The implementation principle is discussed in the third method embodiment, and thus details are not described herein again.

In the present embodiment, when the surveillance device initiates a DNS detection-request to the BGP anycast IP, after receiving the DNS request, the entity server writes the entity server IP into the response content, and after receiving the response content, the surveillance device corelates the detection index (status code, and the response time, etc.) with the entity server IP and BGP anycast IP to complete the collection of the detection index data.

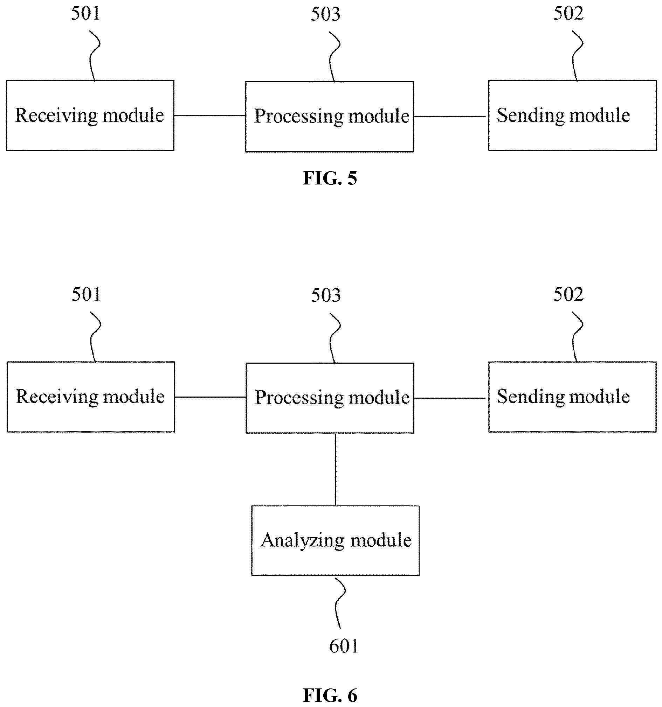

The detection devices according to embodiments of the present disclosure usually can be multiple and distributed in a BGP anycast cluster network. FIG. 5 is a structural diagram of a detection device according to a first device embodiment of the present disclosure. As shown in FIG. 5, the detection device in the present embodiment may include a receiving module 501, a sending module 502, and a processing module 503. The receiving module 501 is configured to receive detection-task information for detecting the QoS of the BGP Anycast cluster, where the detection-task information includes a BGP anycast IP address. The sending module 502 is configured to a detection-request information to the BGP anycast IP address, where the detection-request information is received by an entity server in the BGP anycast cluster that has a shortest AS path from the detection device. The receiving device 501 is further configured to receive a detection-response information sent by the entity server in the BGP anycast cluster, where the detection-response information includes an IP address of the entity server. The processing module 503 is configured to generate detection index data according to the sent detection-request information and the received detection-response information, where the detection index data includes the BGP anycast IP address and the IP address of the entity server.

The device in the present embodiment may be applied to perform the method according to the method embodiment shown in FIG. 1, and the implementation principle and the technical effect to be achieved are similar, and thus details are not described herein again.

For the device as described above, the detection-request information may be an http protocol detection-request information; the detection-request information may also be DNS protocol detection-request information; and the detection index data may further include a status code and a response time of the entity server.

The implementation principle of the device in the present embodiment and the technical effects to be achieved are discussed above, and thus are not described herein again.

FIG. 6 is a structural diagram of a detection device according to a second device embodiment of the present disclosure. As shown in FIG. 6, the detection device of the present embodiment may further include an analyzing module 601, where the analyzing module 601 is configured to analyze the detection index data to obtain the QoS data of the entity server in the BGP anycast cluster.

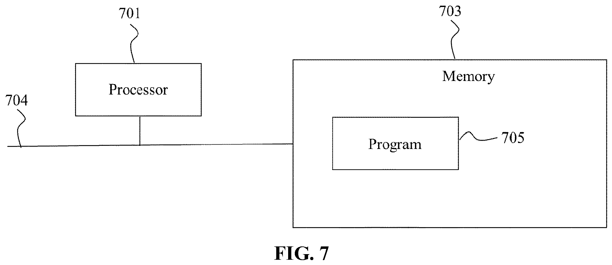

FIG. 7 is a structural diagram of a detection device according to another device embodiment of the present disclosure. As shown in FIG. 7, the detection device includes at least one processor 701 (for example, a central processing unit (CPU)), a memory 703, and at least one communication bus 704 for implementing communication connection between devices. The processor 701 is configured to execute an executable module, such as a computer program, stored in the memory 703. The memory 703 may include a high-speed random-access memory (RAM), and may also include a non-volatile memory such as at least one disk memory.

In some embodiments, the memory 703 stores a program 705 that can be executed by the processor 701. The program 705 includes executing a detection method for detecting the QoS of the BGP Anycast cluster, the method includes that:
the detection device receives detection-task information for detecting the QoS of the BGP Anycast cluster, where the detection-task information includes a BGP Anycast IP address;
the detection device sends a detection-request information to the BGP Anycast IP address, where the detection-request information is received by an entity server in the BGP Anycast cluster that has a shortest AS path from the detection device;
the detection device receives a detection-response information sent by the entity server in the BGP Anycast cluster, where the detection-response information includes an IP address of the entity server; and
the detection device generates detection index data according to the sent detection-request information and the received detection-response information, where the detection index data includes the BGP Anycast IP address and the IP address of the entity server.

The above-mentioned program for performing the detection method for detecting the QoS of the BGP anycast cluster, preferably, the detection-request information is http protocol detection-request information.

The above-mentioned program for performing the detection method for detecting the QoS of the BGP anycast cluster, preferably, the detection-request information is DNS protocol detection-request information.

The above-mentioned program for performing the detection method for detecting the QoS of the BGP anycast cluster, preferably, the detection index data further includes a status code and a response time of the entity server.

The above-mentioned program for performing the detection method for detecting the QoS of the BGP anycast cluster, preferably, after the detection device generates the detection index data according to the sent detection-request information and the received detection-response information, the method further includes that:

the detection index data is analyzed to obtain the QoS data of the entity server in the BGP anycast cluster.

It should be noted that the above embodiments are only used to illustrate the technical solutions of the present disclosure, and are not limited thereto; although the present disclosure has been described in detail with reference to the foregoing embodiments, those skilled in the art should understand that they can still make modifications for the technical solutions described in the foregoing embodiments as long as they fall within the scope of the claims.

## Claims

1. A method for detecting quality of service, QoS, of a border gateway protocol, BGP, anycast cluster, implemented by a detection device , the method comprising
receiving (S101), by the detection device, detection-task information for the QoS of the BGP anycast cluster, wherein the detection-task information includes a BGP anycast IP address;
sending (S102), by the detection device, detection-request information to the BGP anycast IP address, wherein the detection-request information is received by an entity server in the BGP anycast cluster that has a shortest autonomous system, AS, path from the detection device; the method **characterized in that** it further comprises:
receiving (S103), by the detection device, detection-response information sent by the entity server in the BGP anycast cluster, wherein the detection-response information includes an IP address of the entity server; and
generating (S104), by the detection device, detection index data according to the detection-request information and the detection-response information, wherein the detection index data includes the BGP anycast IP address and the IP address of the entity server.

2. The method of claim 1, wherein the detection request information includes http protocol detection-request information.

3. The method of claim 2, further comprising:
writing, by the entity server after receiving a http request, the entity server IP into the response content; and
corelating, by the detection device after receiving the response content, detection index with the entity server IP and BGP anycast IP to complete collecting the detection index data.

4. The method of claim 1, wherein the detection-request information includes DNS protocol detection-request information.

5. The method of claim 4, , further comprising:
writing, by the entity server after receiving a DNS request, the entity server IP into the response content; and
corelating, by the detection device after receiving the response content, the detection index with the entity sever IP and BGP anycast IP to complete the collection of the detection index data.

6. The method of claim 1, wherein the detection index data further includes a status code and a response time of the entity server.

7. The method of claim 1, wherein after the detection device generates the detection index data according to the detection-request information and the detection-response information, the method further includes:
analyzing (S201) the detection index data to obtain QoS data of the entity server in the BGP anycast cluster.

8. A detection device for detecting QoS of a border gateway protocol, BGP, anycast cluster, wherein:
a quantity of the detection device is multiple, and the detection devices are distributed in a BGP anycast cluster network, and the detection device includes:
a receiving module (501), configured to receive detection-task information for detecting the QoS of the BGP Anycast cluster, wherein the detection-task information includes a BGP anycast IP address; and
a sending module (502), configured to send detection-request information to the BGP anycast IP address, wherein the detection-request information is received by an entity server in the BGP anycast cluster that has a shortest AS path from the detection device; the detection device **characterized by**:
the receiving module is further configured to receive a detection-response information sent by the entity server in the BGP anycast cluster, wherein the detection-response information includes an IP address of the entity server; and
the detection device further includes a processing module (503), and the processing module is configured to generate detection index data according to the detection-request information and the detection-response information, wherein the detection index data includes the BGP anycast IP address and the IP address of the entity server.

9. The device of claim 8, wherein the detection request information includes http protocol detection request information.

10. The device of claim 8, wherein the detection-request information includes DNS protocol detection-request information.

11. A detection device, comprising:
at least one processor (701),
a memory (703) configured to store a program (705); and
at least one communication bus (704) configured to communicatively connecting the at least one processor and the memory;
wherein when executing the program, the at least one processor is configured to implement a method for detecting quality of service, QoS, of a border gateway protocol, BGP, anycast cluster, the method comprising:
receiving (S101), by the detection device, detection-task information for the QoS of the BGP anycast cluster, wherein the detection-task information includes a BGP anycast IP address;
sending (S102), by the detection device, detection-request information to the BGP anycast IP address, wherein the detection-request information is received by an entity server in the BGP anycast cluster that has a shortest autonomous system, AS, path from
the detection device;
**characterized in that** the method further comprises:
receiving (S103), by the detection device, detection-response information sent by the entity server in the BGP anycast cluster, wherein the detection-response information includes an IP address of the entity server; and
generating (S104), by the detection device, detection index data according to the detection-request information and the received detection-response information, wherein the detection index data includes the BGP anycast IP address and the IP address of the entity server.

12. The device of claim 11, wherein the detection request information includes http protocol detection-request information.

13. The device of claim 11, wherein the detection-request information includes DNS protocol detection-request information.

14. The device of claim 11, wherein the detection index data further includes a status code and a response time of the entity server.

15. The device of claim 11, wherein the method further includes:
analyzing (S201) the detection index data to obtain QoS data of the entity server in the BGP anycast cluster.

## Patentansprüche

1. Eine Methode für die Erkennung einer Servicequalität, QoS, eines Anycast-Clusters des Grenz-Gateway-Protokolls, BGP, implementiert durch eine Erkennungsvorrichtung, wobei die Methode Folgendes umfasst:
Erhalt (S101) durch die Erkennungsvorrichtung der Erkennungsaufgabeinformation für die QoS des BGP Anycast-Clusters, wobei die Erkennungsaufgabeinformation eine BGP Anycast IP-Adresse einschliesst;
Senden (S102) durch die Erkennungsvorrichtung der Erkennungsanforderungsinformation an die BGP Anycast IP-Adresse, wobei die Erkennungsanforderungsinformation durch einen Entitätsserver in einem BGP Anycast Cluster empfangen wird, der den kürzesten, autonomen Systemweg, AS, von der Erkennungsvorrichtung aufweist;
wobei die Methode **dadurch gekennzeichnet ist, dass** sie weiter Folgendes umfasst:
Empfang (S103) durch die Erkennungsvorrichtung der durch den Entitätsserver in dem BGP Anycast Cluster gesandten Erkennungsantwortsinformation, wobei die Erkennungsantwortsinformation eine IP-Adresse des Entitätsservers einschliesst; und
Erzeugung (S104) durch die Erkennungsvorrichtung der Erkennungsindexdaten übereinstimmend mit der Erkennungsanforderungsinformation und der Erkennungsantwortsinformation, wobei die Erkennungsindexdaten die BGP Anycast IP-Adresse und die IP-Adresse des Entitätsservers einschliessen.

2. Die Methode gemäss Anspruch 1, bei der die Erkennungsanforderungsinformation http-Protokoll-Erkennungsanforderungs-Information einschliesst.

3. Die Methode gemäss Anspruch 2, die weiter Folgendes umfasst:
Nach Empfang einer http-Anforderung schreibt der Entitätsserver die Entitätsserver-IP im Antwortsinhalt; und
nach Empfang des Antwortsinhalts, Korrelation durch die Erkennungsvorrichtung des Erkennungsindexes mit dem Entitätsserver-IP und GBP Anycast IP zwecks Vervollständigung der Erfassung der Erkennungsindexdaten.

4. Die Methode gemäss Anspruch 1, bei der die Erkennunganforderungs-Information DNS-Protokoll-Erkennungsanforderungs-Information einschliesst.

5. Die Methode gemäss Anspruch 4, die weiter Folgendes umfasst:
Nach Empfang einer DNS-Anforderung, Schreiben durch den Entitätsserver des Entitätsserver-IPs im Antwortsinhalt; und
nach Empfang des Antwortsinhalts, Korrelation durch die Erkennungsvorrichtung des Erkennungsindexes mit dem Entitätsserver IP und BGP Anycast IP zwecks Vervollständigung der Erfassung der Erkennungsindexdaten.

6. Die Methode gemäss Anspruch 1, bei der die Erkennungsindexdaten weiter einen Statuscode und eine Antwortszeit für den Entitätsserver einschliessen.

7. Die Methode gemäss Anspruch 1, wobei nach der Erzeugung der Erkennungsindexdaten durch die Erkennungsvorrichtung übereinstimmend mit der Erkennungsanforderungs-Information und der Erkennungsantwort-Information, die Methode weiter Folgendes einschliesst:
Analyse (S201) der Erkennungsindexdaten zwecks Erhalt von QoS-Daten des Entitätservers im BGP Anycast Cluster.

8. Eine Erkennungsvorrichtung für die Erkennung von QoS eines Anycast Clusters des Grenz-Gateway-Protokolls, BGP, wobei:
Eine Anzahl der Erkennungsvorrichtung vielfach ist, und die Erkennungsvorrichtungen in einem BGP Anycast Cluster-Netz verteilt sind und die Erkennungsvorrichtung Folgendes einschliesst:
Ein Empfangsmodul (501), das konfiguriert ist, um Erkennungsaufgabeninformation für die Erkennung des QoS des GBP Anycast Clusters zu empfangen, wobei die Erkennungsaufgabeninformation eine BGP Anycast IP-Adresse einschliesst; und
ein Sendemodul (502), das konfiguriert ist, um Erkennungsanforderungsinformation an die BGP Anycast IP-Adresse zu senden, wobei die Erkennungsanforderungsinformation von einem Entitätserver in dem BGP Anycast Cluster empfangen wird, der einen kürzesten AS-Weg ab der Erkennungsvorrichtung hat; Erkennungsvorrichtung, die **dadurch gekennzeichnet ist, dass**:
Das Empfangsmodul weiter konfiguriert ist, um eine Erkennungsantwortinformation, die durch den Entitätserver im BGP Anycast Cluster gesandt wurde, zu empfangen, wobei die Erkennungsantwortinformation eine IP-Adresse vom Entitätserver einschliesst; und
dass die Erkennungsvorrichtung weiter ein Verarbeitungsmodul (503) einschliesst und das Verarbeitungsmodul konfiguriert ist, um Erkennungsindexdaten übereinstimmend mit der Erkennungsanforderungsinformation und der Erkennungsantwortsinformation zu erzeugen, wobei die Erkennungsindexdaten die BGP Anycast IP-Adresse und die IP-Adresse des Entitätservers einschliesst.

9. Die Vorrichtung gemäss Anspruch 8, bei der die Erkennungsanforderungsinformation Erkennungsanforderungsinformation des http-Protokolls einschliesst.

10. Die Vorrichtung gemäss Anspruch 8, bei der die Erkennungsanforderungsinformation Erkennungsanforderungsinformation des DNS-Protokolls einschliesst.

11. Eine Vorrichtung, die mindestens Folgendes umfasst:
einen Prozessor (701),
einen Speicher (703), der konfiguriert ist, um ein Programm /705) zu speichern, und
mindestens einen Kommunikationsbus (704), der konfiguriert ist, um in Kommunikation den mindestens einen Prozessor und den Speicher zu verbinden;
wobei, wenn das Programm ausgeführt wird, der mindestens eine Prozessor konfiguriert ist, um eine Methode für die Erkennung einer Servicequalität, QoS, eines Anycast Cluster Grenz-Gateway-Protokolls, BGP, zu implementieren, wobei die Methode Folgendes umfasst:
Empfang (S101) durch die Erkennungsvorrichtung der Erkennungsaufgabeninformation für den QoS des BGP Anycast Clusters, wobei die Erkennungsaufgabeninformation eine BGP Anycast IP-Adresse einschliesst;
Senden (S102) durch die Erkennungsvorrichtung der Erkennungsanforderungsinformation an die BGP Anycast IP-Adresse, wobei die Erkennungsanforderungsinformation durch einen Entitätsserver im BGP Anycast Cluster empfangen wird, der einen kürzestes, autonomen Systemweg, AS, ab der Erkennungsvorrichtung aufweist;
**dadurch gekennzeichnet, dass** die Methode weiter Folgendes umfasst:
Empfang (S103) durch die Erkennungsvorrichtung der durch den Entitätsserver im BGP Anycast Cluster gesandten Erkennungsantwortsinformation, wobei die Erkennungsantwortsinformation eine IP-Adresse des Entitätsservers einschliesst, und
Erzeugung (S104) durch die Erkennungsvorrichtung der Erkennungsindexdaten übereinstimmend mit der Erkennungsanforderungsinformation und der empfangenen Erkennungsantwortsinformation, wobei die Erkennungsindexdaten die BGP Anycast IP-Adresse und die IP-Adresse des Entitätsservers einschliessen.

12. Die Vorrichtung gemäss Anspruch 11, bei der die Erkennungsanforderungsinformation http-Protokoll-Erkennungsanforderungsinformation einschliesst.

13. Die Vorrichtung gemäss Anspruch 11, bei der die Erkennungsanforderungsinformation DNS-Protokoll-Erkennungsanforderungsinformation einschliesst.

14. Die Vorrichtung gemäss Anspruch 11, bei der die Erkennungsindexdaten weiter einen Statuscode und eine Antwortszeit des Entitätsservers einschliessen.

15. Die Vorrichtung gemäss Anspruch 11, bei der die Methode weiter Folgendes einschliesst:
Die Analyse (S201) der Erkennungsindexdaten zwecks Erhalt der QoS-Daten des Entitätsservers im BGP Anycast Cluster.

## Revendications

1. Une méthode de détection de la qualité du service (QoS) d'une grappe Anycast BGP (border gateway protocol - protocole d'échange de route externe), mise en place par un dispositif de détection, la méthode comprenant les pas suivants:
recevoir (S101) par un dispositif de détection l'information de tâche de détection pour la QoS de la grappe Anycast BGP, où l'information de tâche de détection comprend une adresse IP Anycast BGP;
envoyer (S102) par le dispositif de détection l'information de demande de détection vers l'adresse IP Anycast BGP; où l'information de demande de détection est reçue par un serveur d'entité dans la grappe Anycast BGP ayant le chemin AS (système autonome) le plus court du dispositif de détection, la méthode **caractérisée en ce qu'**elle comprend en outre les pas suivants:
recevoir (S103) par le dispositif de détection l'information de réponse de détection envoyée par le serveur d'entité dans la grappe Anycast BGP où l'information de réponse de détection comprend une adresse IP du serveur d'entité; et
générer (S104) par le dispositif de détection les données d'index de détection conformément à l'information de demande de détection et à l'information de réponse de détection, où les données d'index de détection comprennent l'adresse IP Anycast BGP et l'adresse IP du serveur d'entité.

2. La méthode de la revendication 1 où l'information de demande de détection comprend l'information de demande de détection de protocole http.

3. La méthode de la revendication 2, comprenant en outre les pas suivants:
écrire, par le serveur d'entité, après avoir reçu une demande http, l'IP du serveur d'entité dans le contenu de la réponse; et
mettre en corrélation, par le dispositif de détection, après avoir reçu le contenu de la réponse, l'index de détection avec l'IP du serveur d'entités et l'IP Anycast BGP afin de compléter la collecte des données d'index de détection.

4. La méthode de la revendication 1 où l'information de demande de détection comprend l'information de demande de détection de protocole DNS (Domain Name System).

5. La méthode de la revendication 4, comprenant en outre les pas suivants:
écrire, par le serveur d'entité, après avoir reçu une demande DNS, l'IP du serveur d'entité dans le contenu de la réponse ; et
mettre en corrélation, par le dispositif de détection, après avoir reçu le contenu de la réponse, l'index de détection avec l'IP du serveur d'entité et l'IP Anycast BGP afin de compléter la collecte des données d'index de détection.

6. La méthode de la revendication 1 où les données d'index de détection comprennent en outre un code de statut et un temps de réponse du serveur d'entité.

7. La méthode de la revendication 1, où, après que le dispositif de détection ait généré les données d'index de détection, conformément à l'information de demande de détection et à l'information de réponse de détection, la méthode comprend en outre les pas suivants:
analyser (S201) les données d'index de détection pour obtenir les données de la QoS du serveur d'entités dans la grappe Anycast BGP.

8. Un dispositif de détection de la QoS d'une grappe Anycast BGP (border gateway protocol - protocole d'échange de route externe), où:
la quantité de dispositifs de détection est multiple, et les dispositifs de détection sont distribués dans le réseau de grappes Anycast BGP, et le dispositif de détection comprend les éléments suivants:
un module de réception (501), configuré pour recevoir l'information de tâche de détection pour détecter la QoS de la grappe Anycast BGP, où l'information de tâche de détection comprend une adresse IP Anycast BGP; et
un module d'envoi (502), configuré pour envoyer l'information de demande de détection vers l'adresse IP Anycast BGP ; où l'information de demande de détection est reçue para un serveur d'entité dans la grappe Anycast BGP ayant le chemin AS le plus court du dispositif de détection ; le dispositif de détection étant **caractérisé par** ce qui suit:
le module de réception est configuré en outre pour recevoir l'information de réponse de détection envoyée par le serveur d'entité dans la grappe Anycast BGP, où l'information de réponse de détection comprend une adresse IP du serveur d'entité; et
le dispositif de détection comprend en outre un module de traitement (503), configuré pour générer les données d'index de détection conformément à l'information de demande de détection et à l'information de réponse de détection, où les données d'index de détection comprennent l'adresse IP Anycast BGP et adresse IP du serveur d'entité.

9. Le dispositif de la revendication 8, où l'information de demande de détection comprend l'information de demande de détection de protocole http.

10. Le dispositif de la revendication 8, où l'information de demande de détection comprend l'information de demande de détection de protocole DNS (Domain Name System).

11. Un dispositif de détection comprenant les éléments suivants:
au moins un processeur (701);
une mémoire (703), configurée pour stocker un logiciel (705); et
au moins un bus de communication (704) configuré pour connecter de manière communicative au moins un processeur et la mémoire;
où lors de l'exécution du logiciel, au moins l'un des processeurs est configuré pour mettre en place une méthode pour détecter la qualité du service (QoS) d'une grappe Anycast BGP (border gateway protocol - protocole d'échange de route externe); la méthode comprenant les pas suivants:
recevoir (S101), par le dispositif de détection, l'information de tâche de détection pour la QoS de la grappe Anycast BGP, où l'information de tâche de détection comprend une adresse IP Anycast BGP;
envoyer (S102), par le dispositif de détection, l'information de demande de détection de l'adresse IP Anycast BGP, où l'information de demande de détection est reçue par un serveur d'entité dans la grappe Anycast BGP qui a le plus court chemin AS (système autonome) du dispositif de détection; **caractérisé en ce que** la méthode comprend en outre les pas suivants:
recevoir (S103) par le dispositif de détection l'information de réponse de détection envoyée par le serveur d'entité dans la grappe Anycast BGP, où l'information de réponse de détection comprend une adresse IP du serveur d'entité; et
générer (S104) par le dispositif de détection les données d'index de détection conformément à l'information de demande de détection et à l'information de réponse de détection, où les données d'index de détection comprennent l'adresse IP Anycast BGP et l'adresse IP du serveur d'entité.

12. Le dispositif de la revendication 11, où l'information de demande de détection comprend l'information de demande de détection de protocole http.

13. Le dispositif de la revendication 11, où l'information de demande de détection comprend l'information de demande de détection de protocole DNS.

14. Le dispositif de la revendication 11, où les données d'index de détection comprennent en outre un code de statut et un temps de réponse du serveur d'entité.

15. Le dispositif de la revendication 11, où la méthode comprend en outre le pas suivant:
analyser (S201) les données d'index de détection pour obtenir les données de la QoS du serveur d'entité dans la grappe Anycast BGP.
